# FASCICULE DE BREVET EUROPEEN

(11) **EP 1 748 525 B1**
(45) Date de publication et mention de la délivrance du brevet: **13.08.2008**
(21) Numéro de dépôt: 06022688.3
(22) Date de dépôt: 18.01.1999
(51) Int. Cl.: H02B 1/28

(54) **Pilier d'angle pour armoire destinée à loger de l'appareillage électrique et armoire équipée d'un tel pilier**
Eckpfosten für Schaltschrank und damit ausgerüsteter Schaltschrank
Corner post for electrical cabinet and cabinet equipped therewith

(30) Priorité: 05.02.1998 FR 9801567
(43) Date de publication de la demande: 31.01.2007
(62) Demande divisionnaire de: 99410003.0
(73) Titulaire: SCHNEIDER ELECTRIC INDUSTRIES SAS, 92500 Rueil-Malmaison (FR)
(72) Inventeur: Martinotti, Patrice, 38050 Grenoble Cedex 09 (FR); Reppelin, Jean-Marc, 38050 Grenoble Cedex 09 (FR); Bourbon, Manuel, 38050 Grenoble Cedex 09 (FR); Maquet, Patrick, 38050 Grenoble Cedex 09 (FR)
(74) Mandataire: Tripodi, Paul

(56) Documents cités:
- DE-A- 1 515 507
- DE-C- 4 106 959
- DE-U- 9 102 900
- DE-U- 9 110 250
- FR-A- 1 213 831

## Description

La présente invention concerne un pilier d'angle pour une armoire destinée à contenir de l'appareillage électrique, ladite armoire ayant un châssis comprenant :
- un panneau de fond portant des éléments de support de l'appareillage,
- des piliers d'angle s'étendant perpendiculairement au panneau de fond et destinés à servir de support aux panneaux d'habillage de l'armoire, la longueur de chaque pilier correspondant sensiblement à la profondeur de l'armoire.

Les brevets DE-U-9 102 900 et DE-C-4 106 959 d'écrivent un pilier d'angle pour une armoire destinée à contenir de l'appareillage électrique.

La plupart des armoires connues à ce jour utilisent des piliers de type monobloc. Ces piliers sont fixés sur le fond du coffret puis, l'habillage constitué par les flancs latéraux et les plaques haute et basse, est fixé sur lesdits piliers à l'aide de vis.

Ce type de pilier ne permet pas d'obtenir une étanchéité suffisante de l'armoire entre piliers et habillage, lui permettant de répondre à des IP élevés.

La présente invention résout ce problème et propose un pilier d'angle pour une armoire électrique, ladite armoire étant facilement démontable et présentant une étanchéité considérablement améliorée, ladite armoire pouvant en outre être aisément associée de manière étanche à d'autres armoires du même type.

A cet effet, la présente invention a pour objet un pilier tel que défini dans les revendications.

Mais d'autres avantages et caractéristiques de l'invention apparaîtront mieux dans la description qui suit et se réfère aux dessins annexés donnés uniquement à titre d'exemple et dans lesquels :
- La figure 1 est une vue éclatée, en perspective, d'une armoire conforme à l'invention,
- la figure 2 illustre en perspective un pilier d'angle monté sur la paroi de fond, et deux parois latérales,
- la figure 3 illustre en perspective une réalisation particulière du pilier d'angle seul,
- les figures 3a,3b,3c illustrent en coupe, le pilier d'angle de la figure précédente, selon trois positions différentes,
- la figure 4 est une vue partielle en coupe, illustrant l'armoire après montage de l'habillage,
- la figure 5 illustre, en perspective, le montage des plastrons sur des montants support-plastrons,
- la figure 6 illustre, en perspective, le montage des support-plastrons sur l'habillage,
- la figure 7 illustre, en perspective, le montage d'une porte sur le cadre support de porte,
- la figure 7a illustre, en perspective, une armoire équipée de montants support-plastron et d'un cadre de porte,
- la figure 8 est une vue partielle, en perspective, illustrant les joints réalisant l'étanchéité aux parties inférieure et supérieure de l'armoire,
- la figure 9 illustre, en perspective, l'association de deux armoires conformes à l'invention,
- la figure 9a illustre, en perspective, l'association de deux armoires au moyen d'un double pilier,
- les figures 10 et 10a illustrent une réalisation particulière de la fixation des parois de l'habillage, au moyen d'un joint déformable, respectivement dans une position de repos et une position de fixation,
- les figures 11 et 11a illustrent une autre réalisation de cette fixation au moyen d'une vis de fixation,
- les figures 12 et 12a illustrent une autre réalisation de cette fixation au moyen d'une came,
- les figures 13, 13a et 13b illustrent une autre réalisation de cette fixation au moyen d'un levier à came,
- les figures 14 et 14a illustrent une autre réalisation utilisant un système à spirale et les figures 15,15a,15b un système à excentrique,
- les figures 16,16a,16b illustrent une autre réalisation utilisant un système à coin et les figures 17;17a,17B un système à vis conique,
- la figure 18 est une vue partielle, en perspective, illustrant le pilier de l'invention équipé de deux rainures d'association, et
- la figure 19 est une vue partielle en coupe illustrant une autre réalisation du pilier d'angle.

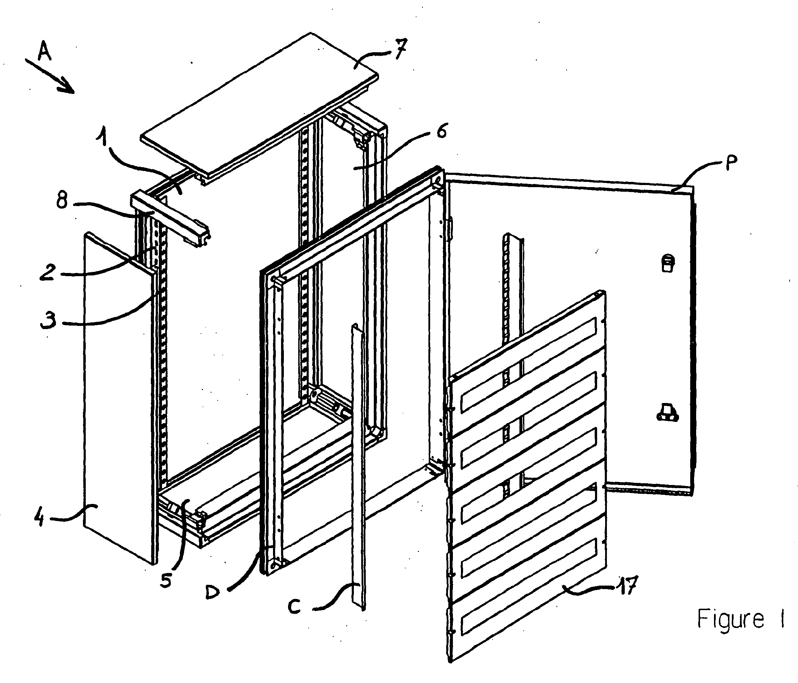

Sur la figure 1, on voit une armoire A composée d'un fond 1 équipé de montants fonctionnels 2 comportant des orifices de fixation 3 de l'appareillage électrique, de quatre panneaux latéraux 4, 5, 6, 7 dont certains sont équipés d'une ou de plusieurs plaques passe câbles (non représentées), de quatre piliers d'angle 8, de deux montants support plastrons C et d'une porte P montée sur un cadre support de porte D..

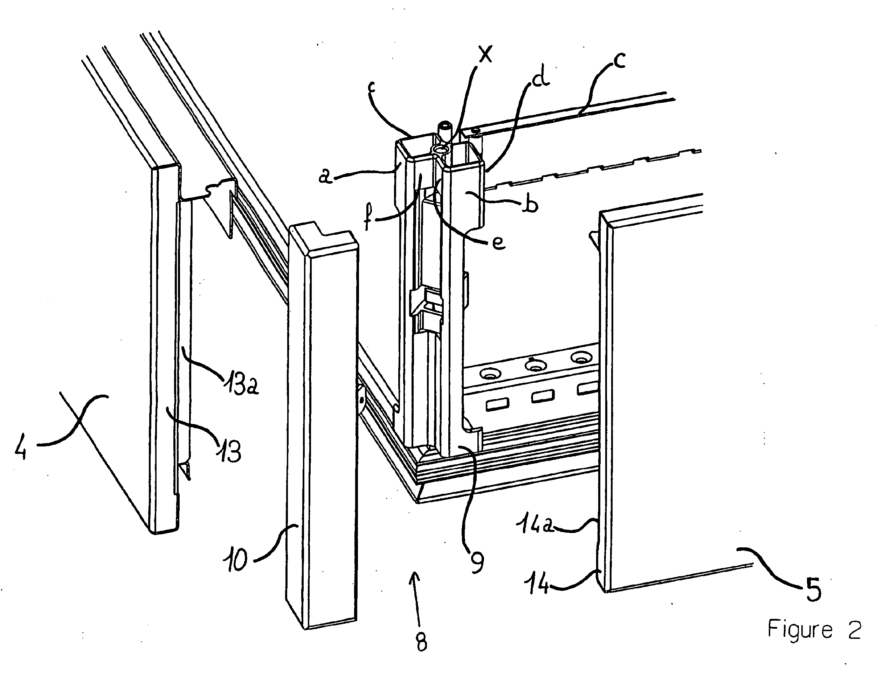

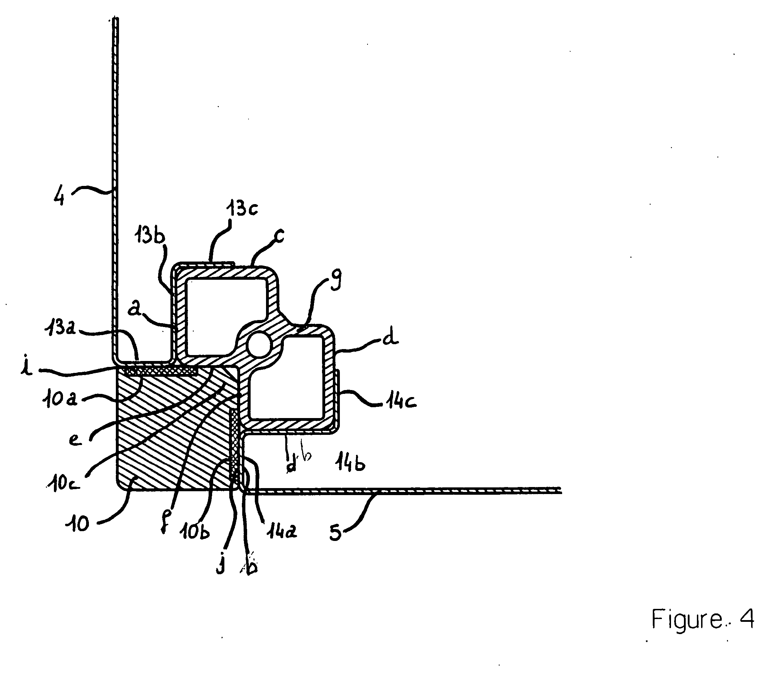

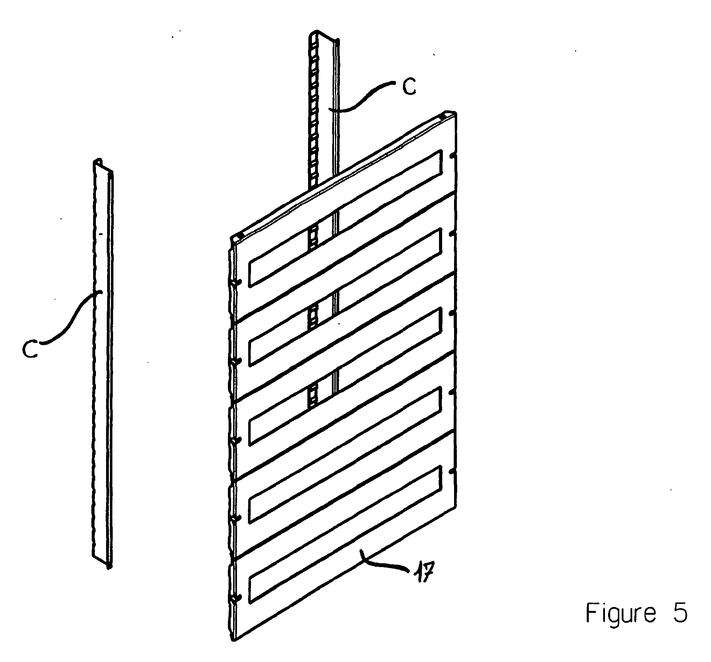

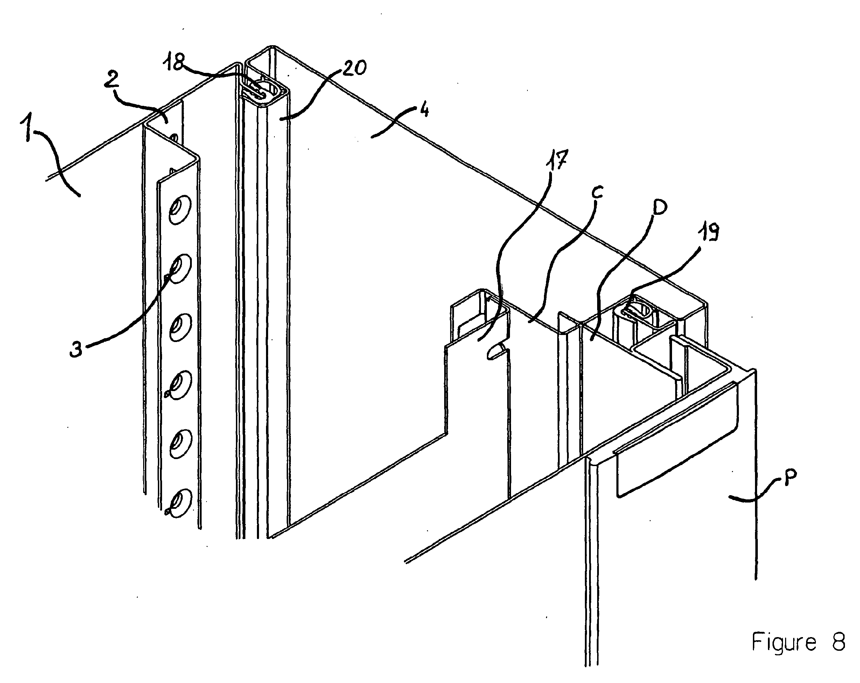

Conformément à la réalisation illustrée plus particulièrement sur les figures 2 à 4, cette partie fixe 9 est constituée par une pièce allongée, comportant de part et d'autre d'un orifice taraudé X deux parties identiques, lesdites parties présentant à leur partie supérieure une section carrée. Chaque partie comporte une face e ou f destinée à recevoir une butée 10c (fig.4) solidaire de la partie mobile 10 et deux faces a,c ou b,d perpendiculaires l'une par rapport à l'autre, destinées à recevoir respectivement deux faces perpendiculaires 13b, 13c ou 4b, 14c appartenant à l'un des panneaux 4,5 (fig.4) et formées lors du pliage trois fois en équerre de l'un des bords latéraux dudit panneau. La partie mobile 10 présente une section sensiblement carrée, comporte la butée précitée 10c et présente deux faces d'appui 10a,10b sensiblement perpendiculaires aptes à venir en appui contre deux faces 13a,14a appartenant respectivement aux deux panneaux à relier 4,5 lors de l'opération de fixation. Ces deux faces (10a,10b) sont pourvues respectivement d'un joint d'étanchéité (i,j). On notera que la butée précitée 10c pourrait aussi bien se trouver sur la partie fixe 9.
Plusieurs modes de réalisation de la fixation de la partie mobile 10 sur la partie fixe 9 seront décrits ultérieurement.
En se reportant aux figures 5 à 7, on voit que le support-plastron C peut recevoir plusieurs plastrons 17. En se reportant à la figure 8, on voit que l'étanchéité aux parties inférieure et supérieure de l'armoire est réalisée par l'intermédiaire respectivement de un ou plusieurs joints de fond 18, et de un ou plusieurs joints de cadre 19. Chaque joint de fond 18 est solidaire de la paroi de fond, et est interposé entre celle-ci et un bord replié 20 de l'une des parois latérales 4 à 7, alors que chaque joint de cadre 19 est solidaire du cadre support de porte D et est interposé entre le cadre support de porte D et l'une des parois latérales 4 à 7.

Les joints permettent de réaliser l'étanchéité entre d'une part le fond et les parois latérales et d'autre part, le cadre de porte et les parois latérales. L'étanchéité entre les parois latérales sera réalisée par les piliers d'angle.

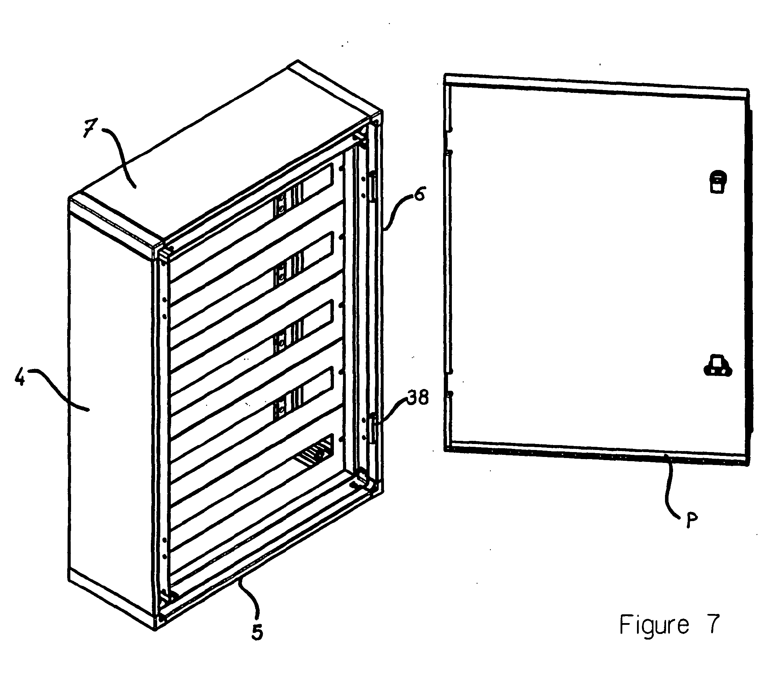

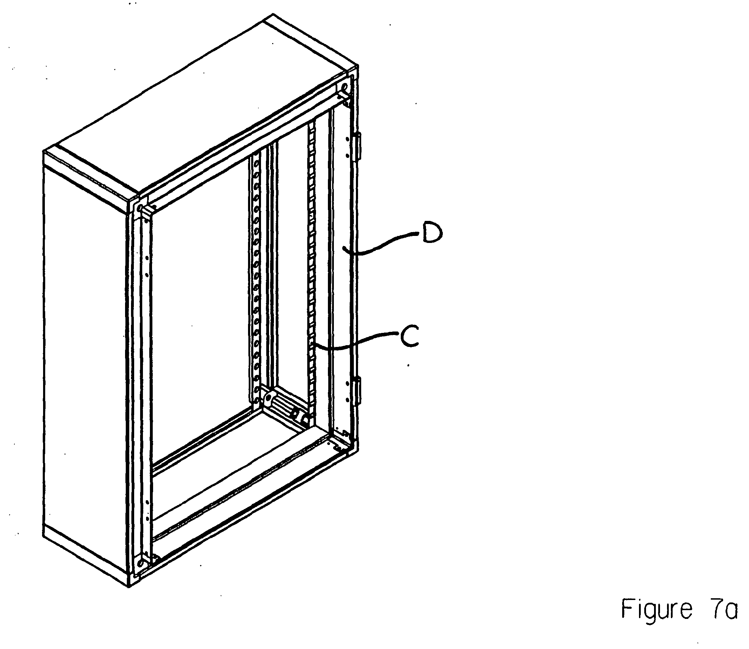

Sur la fig.7a, on voit une armoire dans laquelle un support plastron C est fixé aux piliers et le cadre support de porte D est fixé sur la partie supérieure des piliers, la même vis étant utilisée pour réaliser la fixation du cadre support de porte et celle de la partie mobile sur la partie fixe des piliers.

On décrira ci-après les différentes étapes de montage de l'armoire pour différentes réalisations du mode de fixation de la partie mobile sur la partie fixe.

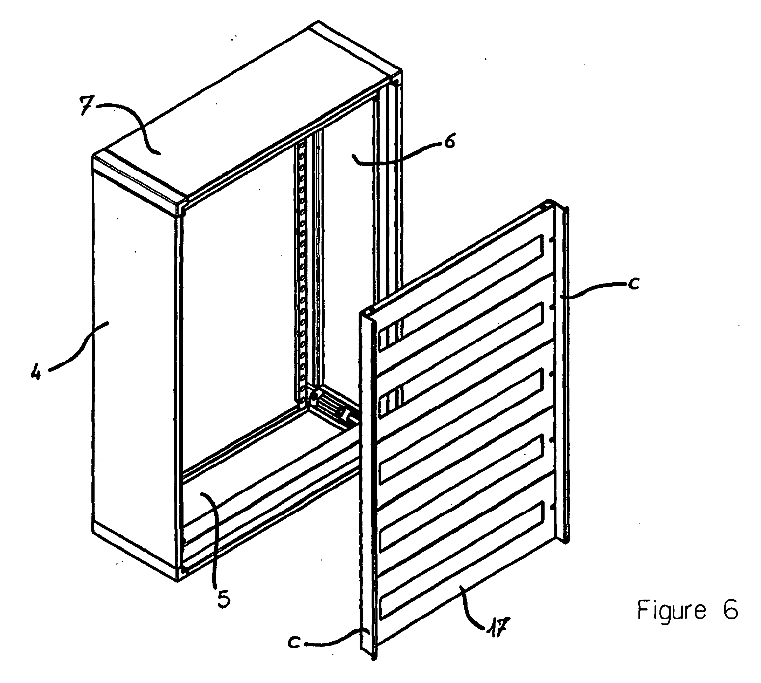

La première étape consiste à fixer les quatre parties fixes 9 des quatre piliers 8 aux quatre coins de la paroi de fond (fig.1). Puis, les parois latérales 4 à 7 sont montées sur les parties fixes des piliers (fig.4) par engagement des rebords latéraux 13,14 (fig.2) pliés trois fois en équerre des parois latérales 4 à 7 sur les faces internes a, b, c,d de la partie fixe 9, laquelle partie fixe assure ainsi un guidage et un maintien en position des parois pendant leur montage (fig. 4). Puis, les panneaux latéraux viennent comprimer les joints 18 situés sur les rebords du fond 1 (fig.8). On notera que dans certains cas, la partie mobile peut être prémontée sur la partie fixe. Puis, on réalise la fixation de la partie mobile sur la partie fixe du pilier.
La troisième étape (fig 6 et7) consiste à fixer le support plastrons C puis le cadre support de porte D, ou vice versa, sur l'habillage, le joint de cadre de porte 19 se comprimant sur le haut des panneaux 4 à 7 et des piliers d'angle 8. Puis, la porte P est montée sur les charnières 38 solidaires du cadre (fig. 7)

On obtient ainsi à la fois une armoire capable de résister à des contraintes mécaniques importantes et présentant une étanchéité importante.

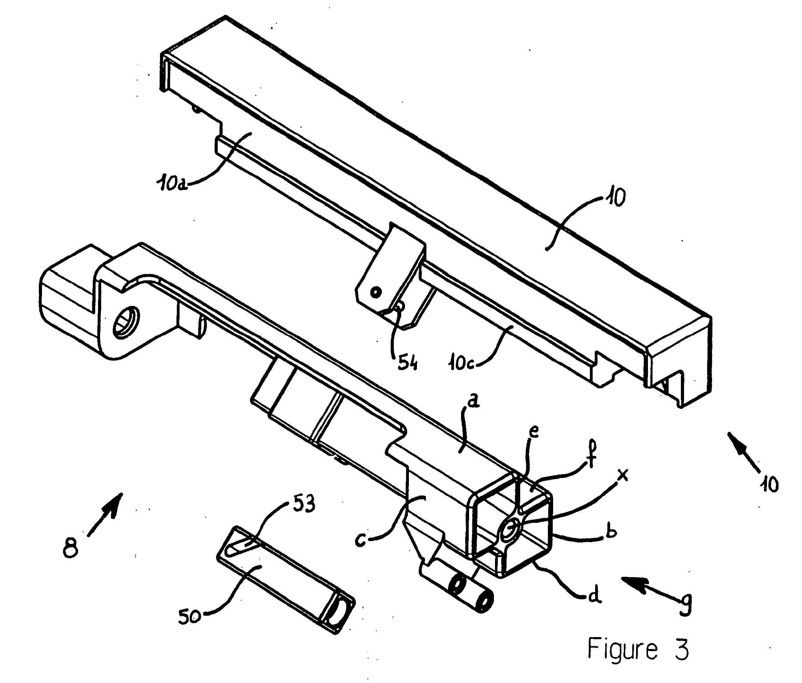

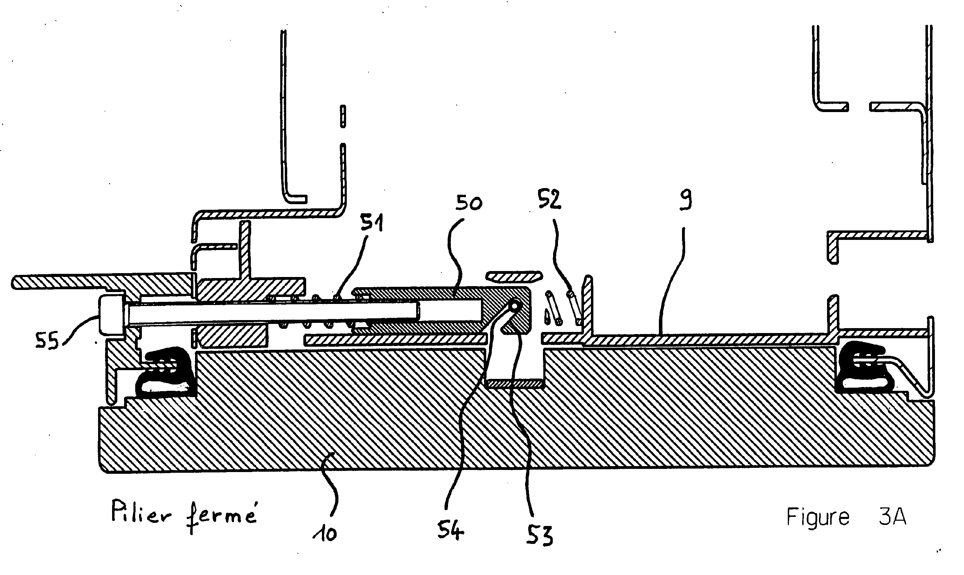

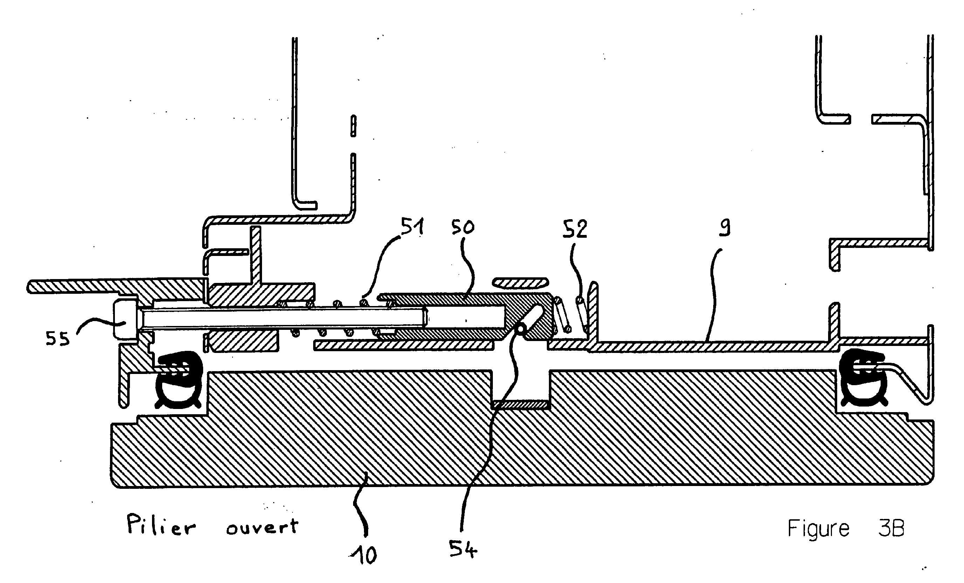

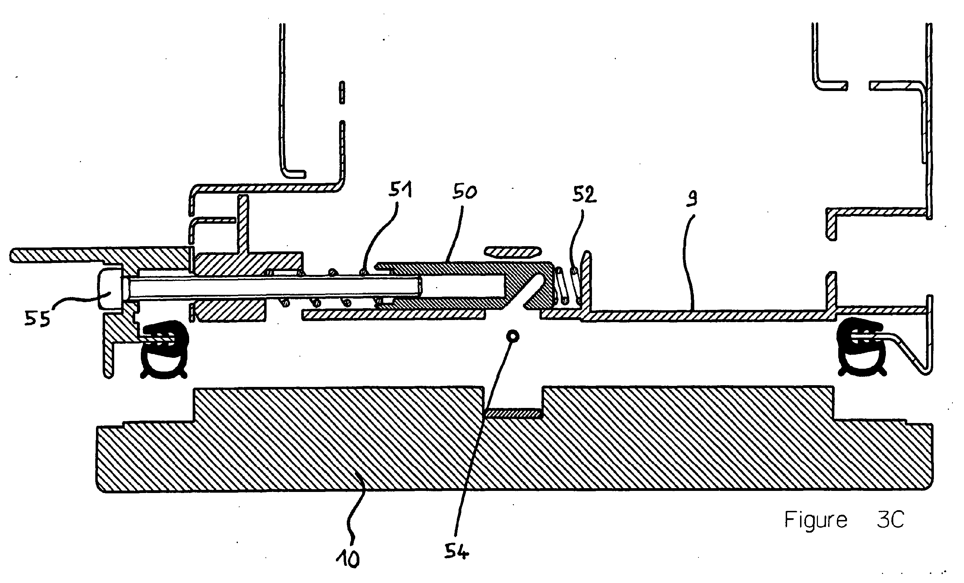

Selon une première réalisation représentée sur les figures 3, 3A,3B 3C et 4, l'organe de manoeuvre permettant de déplacer la partie mobile 10 comprend un écrou de manoeuvre 50 monté en liaison glissière dans le pilier fixe 9 et positionné dans ledit pilier par deux ressorts de compression 51,52. Cet écrou de manoeuvre 50 possède une face inclinée 53 qui coopère avec un axe 54 solidaire de la partie mobile 10, de manière que l'entraînement en translation de l'écrou 50 par l'intermédiaire d'une vis 55 génère un déplacement de la partie mobile 10 suivant un axe perpendiculaire à l'axe de translation de l'écrou de manoeuvre 50. On obtient alors la compression des joints contre les rebords des flancs et parois latérales.

Sur la figure 3A, la vis 55 est serrée, la partie mobile comprime les joints contre les rebords des flancs et des parois. On obtient ainsi une étanchéité relative de l'ensemble.
Sur la figure 3B, la vis 55 est déserrée, la partie mobile 10 est écartée du pilier fixe 9. On obtient ainsi la possibilité de manoeuvrer librement l'ensemble des flancs et des parois latérales.
Sur la figure 3C, la vis 55 est entièrement déserrée, une action sur l'écrou de manoeuvre comprime le ressort 52 et libère ainsi la partie mobile 10 du pilier fixe 9. On obtient ainsi la possibilité de monter et de démonter rapidement la partie mobile 10.

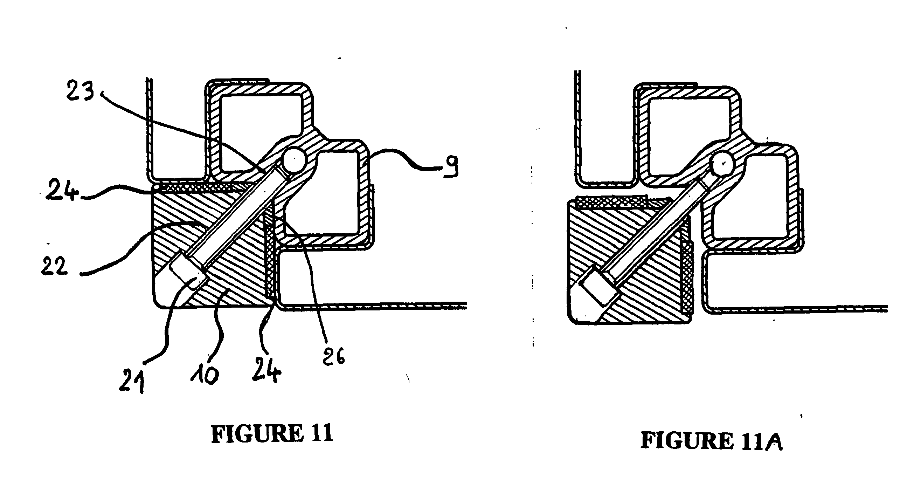

Selon une réalisation particulière de l'invention illustrée sur les figures 11 et 11a, cette fixation peut être réalisée au moyen d'un organe de manoeuvre comprenant une vis 21 traversant un orifice 22 prévu dans la partie mobile 10 et vissée dans un orifice 23 ménagé dans la partie fixe 9, lesdits orifices étant situés dans le prolongement l'un par rapport à l'autre. Selon cette réalisation, l'accès à la vis 21 est latéral. Mais on aurait pu aussi bien envisager que l'accès soit frontal ou arrière. Des joints 24 recouvrent partiellement les deux faces actives de la partie mobile 10 et permettent d'augmenter l'étanchéité du coffret dans les zones de verrouillage de l'habillage, comme ceci sera également le cas dans les autres réalisations décrites ultérieurement.

Ainsi, dans cette réalisation, le vissage de la vis 21 entraîne la compression des joints 24 sur les rebords 13, 14 des parois 4 à 7. On notera la présence d'une butée 26 solidaire de la partie mobile 10 et destinée à empêcher la compression excessive desdits joints 24. On notera également que cette réalisation sans les joints et sans la butée est possible, mais ne présenterait pas le même degré d'étanchéité.

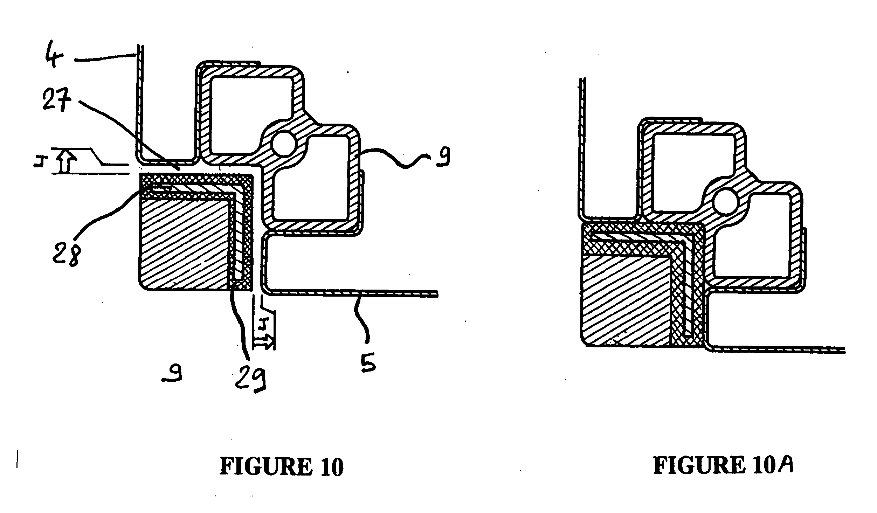

Selon la réalisation décrite sur les figures 10 et 10a, la partie fixe 9 est constituée par un profilé présentant un évidement (ou rainure) longitudinal 27 de section transversale en forme de L, destiné à loger un élément rigide 28 noyé dans un joint 29 expansible constituant la partie mobile 10 du pilier 8. L'expansion du joint 29 (fig. 10a) entraîne une compression sur les flancs latéraux 4 à 7.

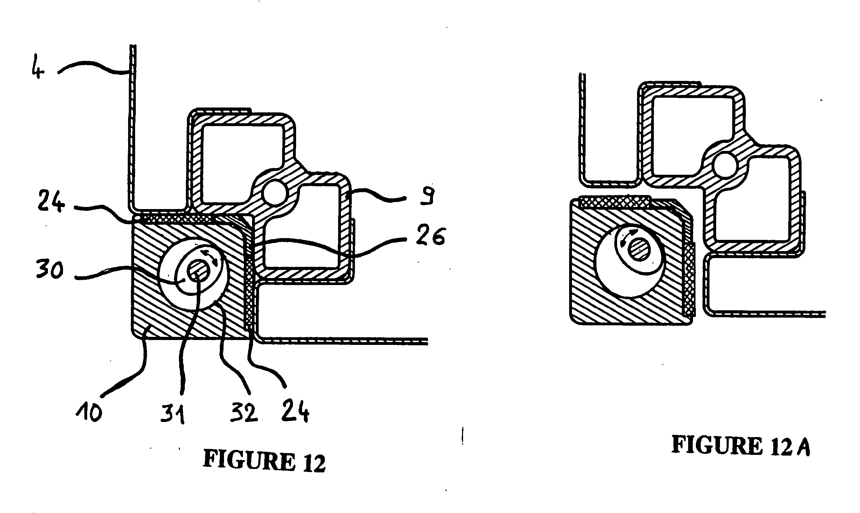

Selon la réalisation des figures 12 et 12a, l'organe de manoeuvre permettant de déplacer la partie mobile 10 comprend une came 30 montée en rotation sur un arbre 31 solidaire d'un bras de la partie fixe 9, à l'intérieur d'un évidement 32 de la partie mobile 10. Cette came 30 coopère avec la surface intérieure de la partie mobile de manière que l'entraînement en rotation de la came 30, par l'intermédiaire d'un moyen d'actionnement approprié entraîne le coulissement de la partie mobile 10 et la compression des joints 24, sur les rebords des flancs latéraux 4 à 7 et ainsi la fixation des panneaux.

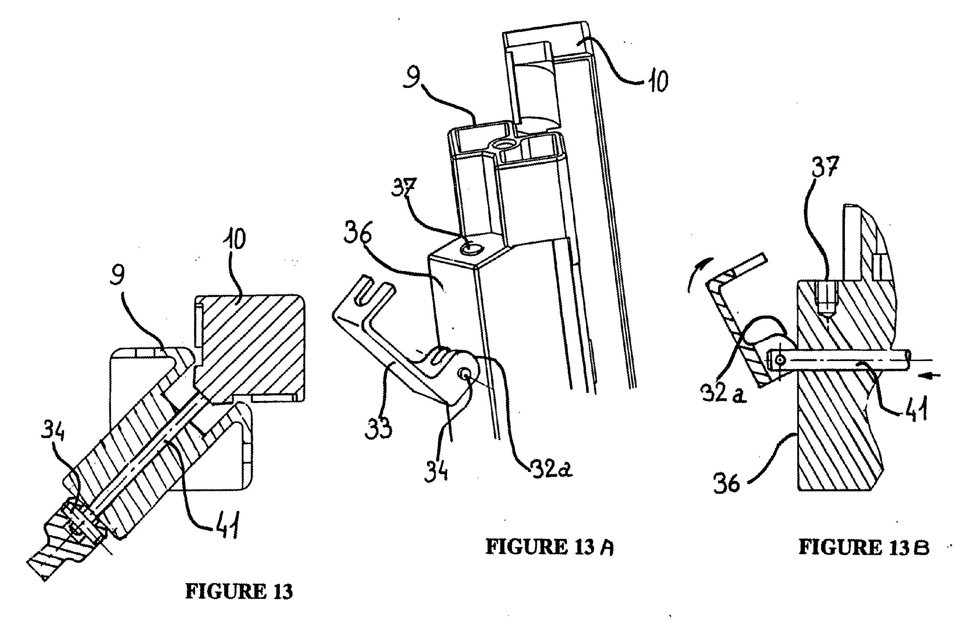

Selon une autre réalisation illustrée sur les figures 13, 13a et 13b, une came 32a est montée à l'extrémité d'un levier 33 monté articulé sur un arbre 34 solidaire de l'extrémité d'un bras 41 appartenant à la partie mobile 10. Dans cette réalisation, la came 32 coopère avec une face extérieure 36 de la partie fixe 9, l'actionnement du levier 33 entraînant le rapprochement des deux parties fixe 9 et mobile 10. En position fermée, le levier 33 vient se loger entre le pilier 8 et une vis de fixation 37 traversant un orifice du levier et vissée dans la partie fixe 9 de manière que le serrage de la vis entraîne le verrouillage de l'ensemble en position de fixation.

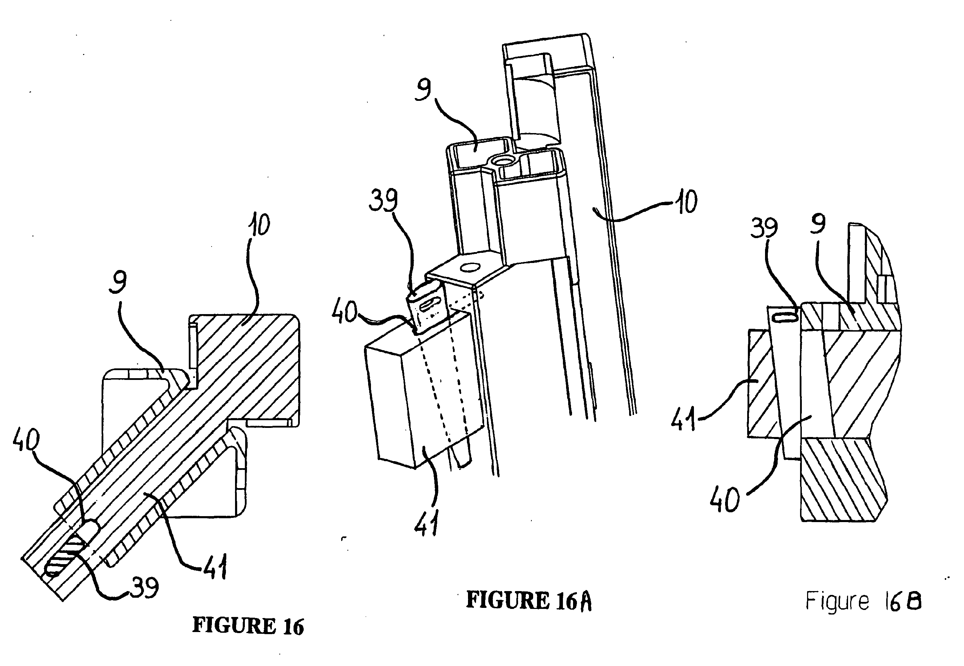

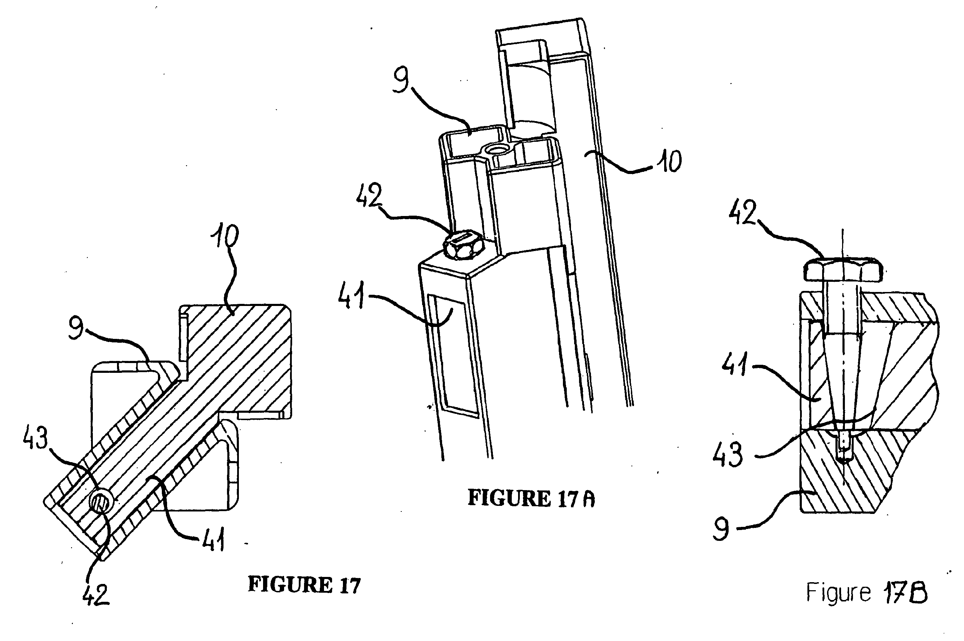

Une autre réalisation non illustrée pourrait être envisagée consistant par exemple à prévoir un écrou fonctionnel comportant une fente hélicoïdale, monté coulissant à l'intérieur de la partie fixe. Cet écrou pourrait être déplacé au moyen d'une vis et coopérer avec un axe solidaire de la partie mobile.
D'autres modes de fixation pourront être envisagés. Par exemple, un mode de fixation (fig.16,fig.16a,fig16b) mettant en oeuvre un coin 39 de forme appropriée apte à être engagé dans un évidement 40 prévu dans le bras 41 solidaire de la partie mobile 10, ledit bras étant monté coulissant à travers la partie fixe 9. De même, ce coin pourrait être remplacé par une vis conique 42 vissée dans un orifice taraudé 43 du bras 41 (fig.17,fig.17a,fig.17b).

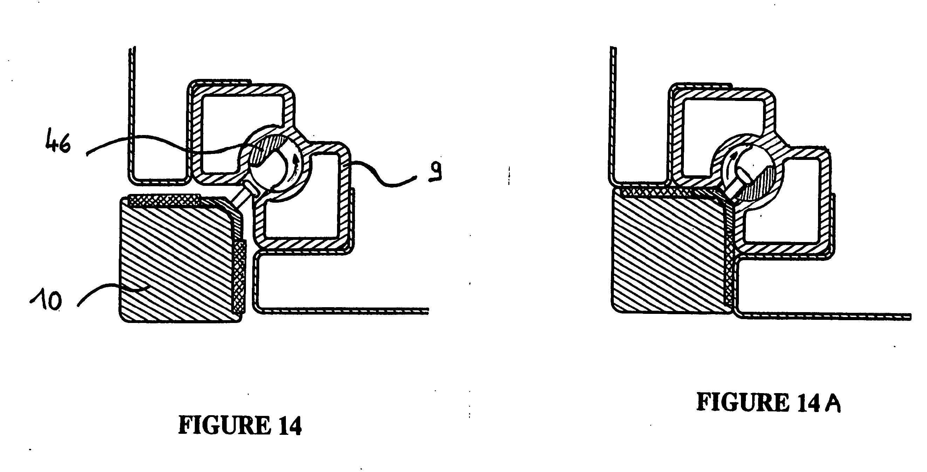

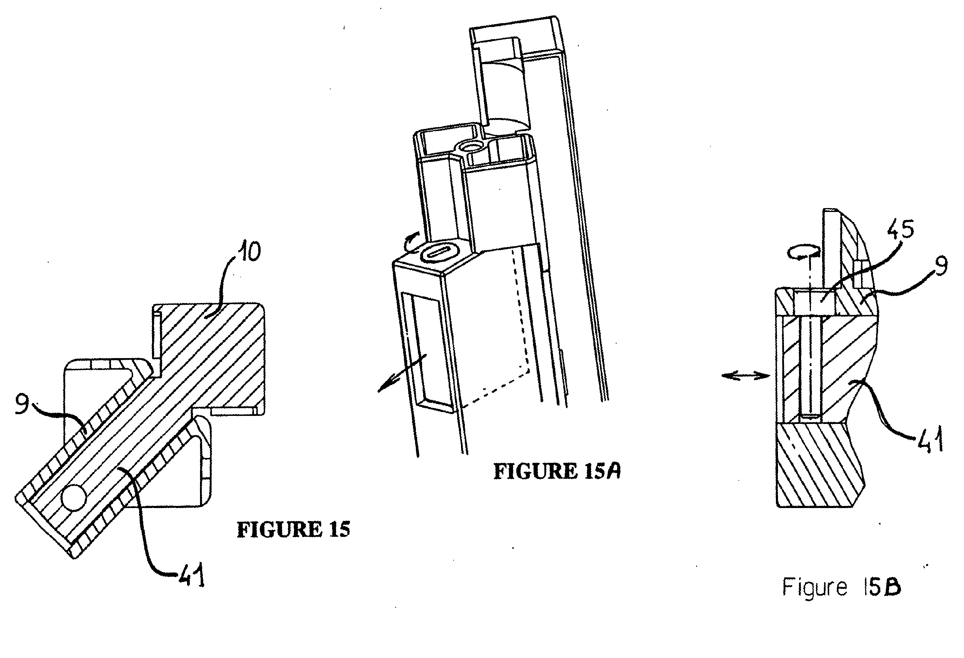

Une autre solution consisterait à utiliser un système à spirale 46 (fig. 14, fig.14a) ou un système à excentrique 45 (fig. 15, fig.15a,fig.15b) monté à l'intérieur du bras 41.

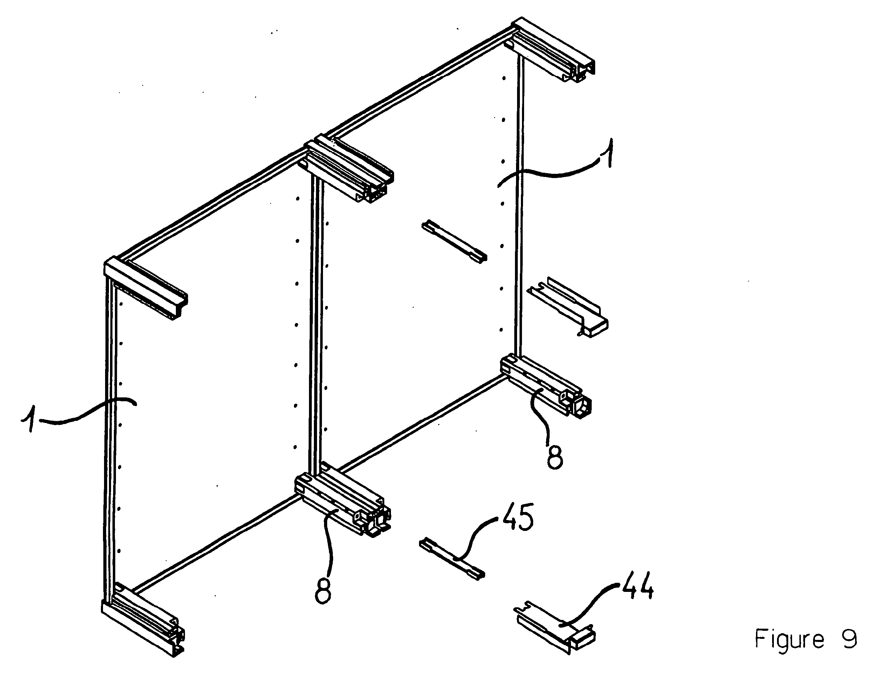

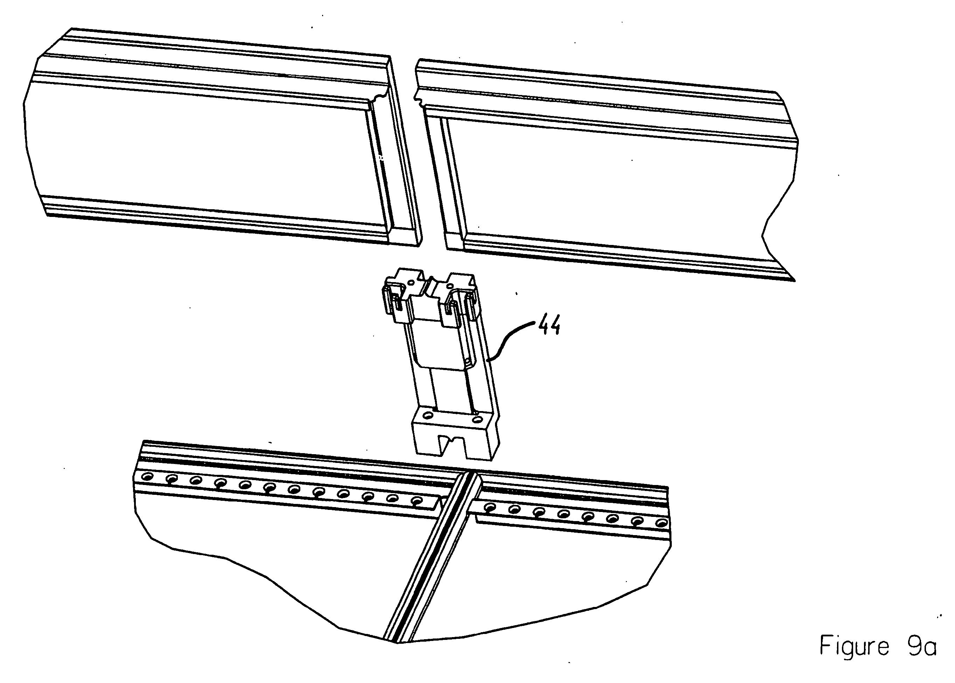

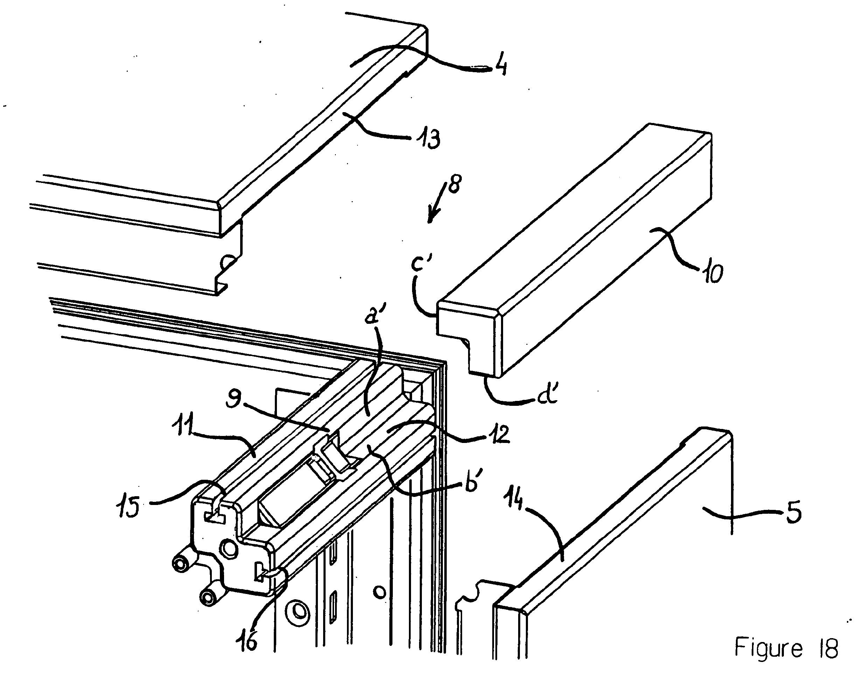

Sur la figure 18, on voit que le pilier peut comporter deux rainures 15,16 destinées à permettre l'association de deux piliers au moyen d'éléments de jonction, tel qu'illustré sur la fig.9.

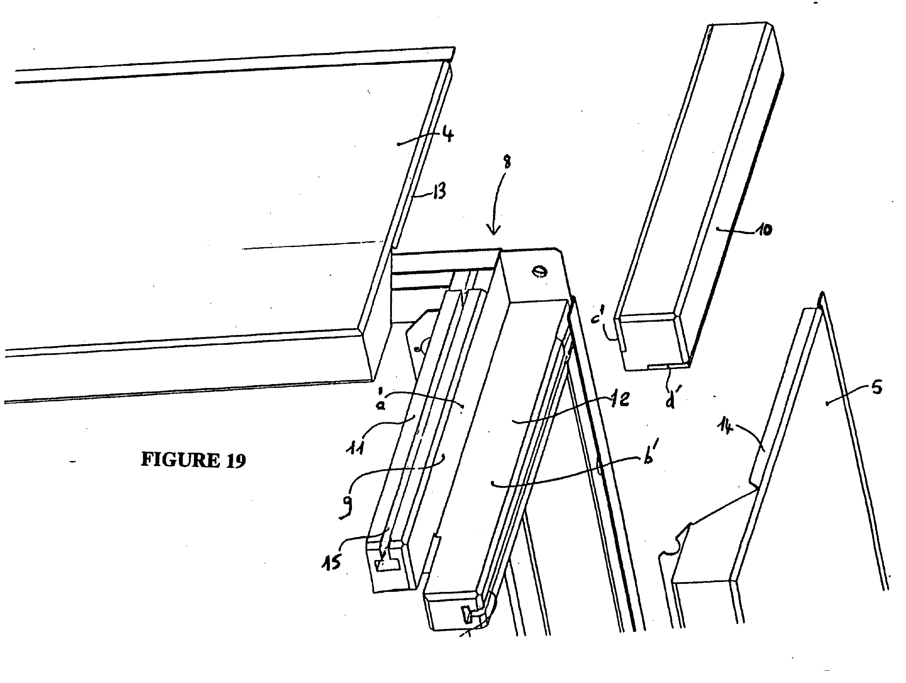

Selon une autre réalisation illustrée sur la figure 19, cette partie fixe 9 est constituée par un profilé de section transversale en forme d'équerre, comportant deux branches perpendiculaires 11, 12. Ce profilé comporte deux faces intérieures a', b', perpendiculaires entre elles destinées à recevoir les deux faces c',d', perpendiculaires entre elles appartenant à un autre profilé de section carré constituant la partie mobile 10 du pilier. Chacune des branches 11, 12 de la partie fixe 9 comporte ainsi une face intérieure a', b' s'étendant dans un plan perpendiculaire au panneau latéral 4, 5 situé du même côté que ladite branche 11, 12 de manière à pouvoir recevoir le bord latéral plié en équerre 13, 14 dudit panneau 4, 5. On voit également que ces deux branches 11, 12 comportent chacune une rainure 15, 16 de section transversale en forme de T destinée à recevoir une pièce de bridage dont la fonction est de permettre l'association de deux armoires juxtaposées tel qu'illustré sur la figure 9.
Ces piliers d'angle 8 ont deux fonctions à savoir une première fonction de guidage des panneaux et une seconde fonction de fixation de ces parois 4 à 7 aux piliers 8, par serrage des bords pliés en équerre 13, 14 de chaque panneau latéral entre les deux faces a', b' de la partie fixe 9 et les deux faces c', d' de la partie mobile, lors de l'opération de fixation de la partie mobile du pilier sur la partie fixe.
On notera que la face avant pourra être composée d'un ou plusieurs support plastrons, d'un ou plusieurs cadre support de porte et d'une ou plusieurs portes. Le cadre support de porte est fixé sur les piliers d'angle et comporte au moins une charnière, ledit cadre comportant un joint 19 situé sur son pourtour inférieur et destiné à réaliser l'étanchéité entre d'une part, le cadre D et d'autre part, les panneaux 4 à 7 et les piliers 8.

Dans toutes ces réalisations, les piliers exercent deux fonctions à savoir, le positionnement et le guidage de l'habillage, et la réalisation de l'étanchéité.

On obtient ainsi deux états pour les piliers, à savoir un état "repos" permettant la mise en place ou la manipulation de l'habillage et un état actif qui permet de réaliser l'étanchéité et/ou le maintien des pièces constituant l'habillage. La partie mobile portant le système d'étanchéité, travaille simplement en compression d'où une élimination des frottements.

On obtient ainsi, grâce à l'invention, une totale liberté de manipulation de l'habillage, et les risques de frottements et donc de détérioration des joints sont supprimés.

La partie mobile peut se désolidariser facilement de la partie fixe afin d'être remplacée par exemple dans le cas d'une détérioration.

Du fait de la composition en deux parties du pilier, il est possible de prévoir des matières différentes pour les deux parties du pilier et de faire évoluer l'esthétique de l'élément extérieur à moindre coût.

On notera que dans toutes ces réalisations, les parties fixe et mobile n'ont pas de position définie mais qu'elles peuvent se trouver indépendamment à l'intérieur ou à l'extérieur du coffret.

Cette invention permet d'avoir un coffret totalement démontable, présentant de forts indices de protection IP ou IK, qu'il soit seul ou associé à d'autres armoires, sans manipulation de joint par l'utilisateur du produit.
Pour associer deux coffrets (fig. 9) ou un coffret et une gaine, on solidarise les fonds l'à l'aide de pièces de bridage 44, 45. Les différents éléments sont mis en place de la même manière que pour un seul coffret, l'étanchéité entre les deux volumes crées par l'association étant assurée par le contact des joints de cadres 19, en haut, et des joints des fonds 18, en bas. Ainsi, l'association des armoires est assurée soit à l'aide de piliers d'association double (fig.9a) constitués de deux piliers simples solidarisés de manière à former un pilier d'association monobloc, soit à l'aide de piliers d'angle simples 8 (fig.9), via des profils de jonction assimilables à des clavettes 45 enfichées dans des rainures prévues dans les piliers d'angle 8.

L'association des armoires est étanchée naturellement, à savoir sans apport de composants d'étanchéité, (hors profils de jonction), ce qui réduit le temps nécessaire pour associer les produits et réduit les risques de défaut d'étanchéité liés à une mauvaise manipulation.

Ce nouveau concept d'enveloppe étanche, démontable et associable offre la possibilité d'associer des enveloppes en hauteur, en largeur et en profondeur, d'où une grande évolutivité des produits, un espace et un accès de câblage importants. Il autorise le démontage d'une ou plusieurs parties pour faciliter l'accès, en cas de modification de l'installation.

Le volume étanche est obtenu par l'intermédiaire des deux joints respectivement de cadre et de fond ainsi que par les piliers d'angle. Le joint de cadre assure également la liaison étanche supérieure entre portes partielles montées sur une même enveloppe. Ces joints de cadre et de fond assurent également la liaison étanche entre différentes enveloppes dans le cas d'association de produits. La présence du cadre support de porte rigidifie l'enveloppe.

## Revendications

1. Armoire avec piliers et destinée notamment à loger de l'appareillage électrique, ladite armoire ayant un châssis comprenant un panneau de fond portant des éléments de support de l'appareillage, des piliers d'angle s'étendant perpendiculairement aux panneaux de fond et destinés à servir de support aux panneaux d'habillage de l'armoire, la longueur de chaque pilier correspondant sensiblement à la profondeur de l'armoire, **caractérisée en ce que** l'un au moins des piliers d'angle (8) comporte d'une part, une partie fixe (9) par rapport à la paroi de fond (1) et présentant au moins une face intérieure (a',b') apte à recevoir et à guider le bord latéral plié (13,14) d'un panneau (4,5) et d'autre part, une partie mobile (10) apte à être fixée sur la partie fixe (9) et présentant au moins une face (c',d') coopérant avec la ou les face(s) précitée(s) (a';b') de la partie fixe (9), de manière que la fixation de la partie mobile (10) sur la partie fixe (9) engendre le serrage du bord latéral précité (13,14) du panneau (4,5) entre la partie fixe (9) et la partie mobile (10), de manière à réaliser une fixation étanche du panneau audit pilier (8).

2. Armoire selon la revendication 1, **caractérisée en ce que** la partie fixe (9) (ou mobile) du pilier (8) comporte un bras (41) monté coulissant à l'intérieur de la partie mobile (10) (ou fixe) entre une position dans laquelle les deux parties sont éloignées de manière à permettre la manipulation des panneaux d'habillage (4 à 7) et une position rapprochée des deux parties correspondant à la position fixée des panneaux, le passage de l'une des positions à l'autre s'effectuant au moyen d'un organe de manoeuvre (30, 33, 39, 40...) coopérant avec un organe de fixation de la partie mobile dans cette dernière position.

3. Armoire selon la revendication 2, **caractérisée en ce que** l'organe de manoeuvre comprend une came (30) montée en rotation autour d'un arbre (31) solidaire de la partie fixe (9) (ou mobile) à l'intérieur d'un évidement (32) prévu dans la partie mobile (10) (respectivement fixe), l'entraînement en rotation de la came (30) par un organe approprié entraînant le coulissement de la partie mobile (10) et la fixation des panneaux (4 à 7).

4. Armoire selon la revendication 2, **caractérisée en ce que** l'organe de manoeuvre comprend une came (32a) formée à l'extrémité d'un levier (33) monté rotatif autour d'un arbre (34) solidaire du bras précité (41) de la partie mobile (10) (fixe), ladite came (32) coopérant avec une face extérieure (36) de la partie fixe (9) (mobile) et le levier (33) étant maintenu en position de fixation des panneaux par l'intermédiaire d'une vis (37) traversant un orifice du levier (33) et vissée dans la partie fixe (9).

5. Armoire selon la revendication 2, **caractérisée en ce que** l'organe de manoeuvre comprend un évidement prévu dans le bras précité (41), ledit évidement (40) coopérant avec un coin (39).

6. Armoire selon la revendication 2, **caractérisée en ce que** l'organe de manoeuvre comprend un évidement conique (43) taraudé prévu dans le bras (41) et coopérant avec une vis conique (42).

7. Armoire selon la revendication 2, **caractérisée en ce que** l'organe de manoeuvre comprend un système à excentrique (45) monté à l'intérieur du bras (41).

8. Armoire selon la revendication 2, **caractérisée en ce que** l'organe de manoeuvre comprend un système à spirale (46) monté à l'intérieur du bras (41).

9. Armoire selon la revendication 1, **caractérisée en ce que** les organes de manoeuvre et de fixation comprennent une vis (21) et deux orifices (22, 23) ménagés respectivement dans la partie mobile (10) et dans la partie fixe (9) et situés dans le prolongement l'un de l'autre, l'un (22) des orifices étant traversant tandis que l'autre (23) est taraudé.

10. Armoire selon la revendication 1, **caractérisée en ce que** le déplacement de la partie mobile (10) est opéré au moyen d'un écrou de manoeuvre (50) monté en liaison glissière dans le pilier fixe (9) et positionné dans ledit pilier fixe (9) par au moins un ressort de compression (51,52), ledit écrou (50) comportant une face inclinée (5 3) coopérant avec un axe (54) solidaire de la partie mobile (10), de manière que l'entraînement en translation de l'écrou de manoeuvre (50) par l'intermédiaire de la vis (55) entraîne le déplacement de la partie mobile suivant un axe perpendiculaire à l'axe de translation de l'écrou de manoeuvre.

11. Armoire selon la revendication 2, **caractérisée en ce que** l'accès à l'organe de fixation est frontal, arrière ou latéral.

12. Armoire selon la revendication 1, **caractérisée en ce que** la partie fixe (9) comprend un profilé comportant une rainure de section transversale en forme de L (27) destinée au logement d'un élément rigide (28) noyé dans un joint expansible (29) constituant la partie mobile (10).

13. Armoire selon l'une quelconque des revendications 1 à 12, **caractérisée en ce que** la partie mobile (10), ou la partie fixe (9), comporte une butée (26,10c) apte à limiter le déplacement de la partie mobile (10) pendant l'opération de fixation.

14. Armoire selon l'une quelconque des revendications 1 à 13, **caractérisée en ce que** ledit pilier comporte une rainure apte à permettre l'association avec un autre pilier au moyen d'une clavette ou analogue.

15. Armoire selon l'une quelconque des revendications 1 à 14, **caractérisée en ce que** ledit pilier est un pilier d'angle composé de deux piliers solidarisés de manière à former un pilier d'association monobloc.

## Claims

1. A cabinet with struts and designed in particular to house electrical switchgear, said cabinet having a frame comprising a back panel bearing switchgear support elements, corner struts extending perpendicularly to the back panels and designed to act as support for the covering panels of the cabinet, the length of each strut corresponding appreciably to the depth of the cabinet, **characterized in that** at least one of the corner struts (8) comprises on the one hand a fixed part (9) with respect to the back wall (1) and presenting at least one inside face (a',b') designed to receive and guide the folded side edge (13,14) of a panel (4,5) and on the other hand a mobile part (10) designed to be fixed onto the fixed part (9) and presenting at least one face (c',d') operating in conjunction with the above-mentioned face(s) (a',b') of the fixed part (9), so that fixing of the mobile part (10) onto the fixed part (9) generates clamping of the above-mentioned side edge (13,14) of the panel (4,5) between the fixed part (9) and the mobile part (10) so as to achieve tightly sealed fixing of the panel to said strut (8).

2. The cabinet according to claim 1, **characterized in that** the fixed (or mobile) part (9) of the strut (8) comprises an arm (41) mounted sliding inside the mobile (or fixed) part (10) between a position wherein the two parts are separated so as to enable handling of the covering panels (4 to 7) and an adjoined position of the two parts corresponding to the fixed position of the panels, movement from one of the positions to the other being achieved by means of a manoeuvring part (30, 33, 39, 40...) operating in conjunction with a fixing part of the mobile part in the latter position.

3. The cabinet according to claim 2, **characterized in that** the manoeuvring part comprises a cam (30) mounted in rotation around a shaft (31) secured to the fixed (or mobile) part (9) inside a recess (32) provided in the mobile (respectively fixed) part (10), driving of the cam (30) in rotation by means of a suitable means resulting in sliding of the mobile part (10) and fixing of the panels (4 to 7).

4. The cabinet according to claim 2, **characterized in that** the manoeuvring part comprises a cam (32a) formed at the end of a lever (33) mounted rotating around a shaft (34) secured to the above-mentioned arm (41) of the mobile (fixed) part (10), said cam (32) operating in conjunction with an external face (36) of the fixed (mobile) part (9) and the lever (33) being held in the fixing position of the panels by means of a screw (37) passing through a hole of the lever (33) and screwed into the fixed part (9).

5. The cabinet according to claim 2, **characterized in that** the manoeuvring part comprises a recess provided in the above-mentioned arm (41), said recess (40) operating in conjunction with a wedge (39).

6. The cabinet according to claim 2, **characterized in that** the manoeuvring part comprises a tapped conical recess (43) provided in the arm (41) and operating in conjunction with a conical screw (42).

7. The cabinet according to claim 2, **characterized in that** the manoeuvring part comprises a system with an eccentric part (45) mounted inside the arm (41).

8. The cabinet according to claim 2, **characterized in that** the manoeuvring part comprises a system with a spiral part (46) mounted inside the arm (41).

9. The cabinet according to claim 1, **characterized in that** the manoeuvring and fixing parts comprise a screw (21) and two holes (22,23) arranged respectively in the mobile part (10) and in the fixed part (9) and situated in the extension of one another, one (22) of the holes being pass-through whereas the other (23) is tapped.

10. The cabinet according to claim 1, **characterized in that** movement of the mobile part (10) is achieved by means of a manoeuvring nut (50) fitted in sliding connection in the fixed strut (9) and positioned in said fixed strut (9) by at least one compression spring (51, 52), said nut (50) comprising an inclined face (53) operating in conjunction with a pin (54) integral to the mobile part (10), so that driving of the manoeuvring nut (50) in translation by means of the screw (55) results in movement of the mobile part along an axis perpendicular to the axis of translation of the manoeuvring nut.

11. The cabinet according to claim 2, **characterized in that** access to the fixing part is via the front, rear or side.

12. The cabinet according to claim 1, **characterized in that** the fixed part (9) comprises a section comprising a groove of L-shaped transverse cross-section (27) designed to house a rigid element (28) sunk in an expandable seal (29) constituting the mobile part (10).

13. The cabinet according to any one of the claims 1 to 12, **characterized in that** the mobile part (10), or the fixed part (9), comprises a stop (26,10c) designed to limit movement of the mobile part (10) during the fixing operation.

14. The cabinet according to any one of the claims 1 to 13, **characterized in that** said strut comprises a groove designed to enable association with another strut by means of a cotter-pin or the like.

15. The cabinet according to any one of the claims 1 to 14, **characterized in that** said strut is a corner strut composed of two struts secured to one another so as to form a monoblock association strut.

## Patentansprüche

1. Schaltschrank mit Eckverbindern, insbesondere zur Aufnahme von elektrischen Schaltgeräten, welcher Schrank ein Rahmengestell mit einem Rückwandblech, an dem Tragelemente für die elektrischen Schaltgeräte befestigt sind, sowie mit Winkeleckverbindern umfasst, welche senkrecht zu den Rückwandblechen angeordnet sind und als Träger für die Verkleidungsbleche des Schaltschranks dienen, wobei die Länge jedes Eckverbinders annähernd der Tiefe des Schaltschranks entspricht, **dadurch gekennzeichnet, dass** mindestens einer der Winkeleckverbinder (8) ein in Bezug zur Rückwand (1) feststehendes Teil mit mindestens einer Innenseite (a', b') zur Aufnahme und Führung des umbogenen Seitenrands (13, 14) eines Verkleidungsblechs (4, 5) sowie ein bewegliches Teil (10) umfasst, das auf dem feststehenden Teil (9) befestigt werden kann und mindestens eine Seite (c', d') umfasst, die mit der bzw. den genannten Seiten (a'; b') des feststehenden Teils (9) zusammenwirkt, derart dass die Befestigung des beweglichen Teils (10) auf dem feststehenden Teil (9) ein Einklemmen des genannten Seitenrands (13, 14) des Bleches (4, 5) zwischen dem feststehenden Teil (9) und dem beweglichen Teil (10) bewirkt, so dass eine dichte Befestigung des Bleches auf dem genannten Eckverbinder (8) entsteht.

2. Schaltschrank nach Anspruch 1, **dadurch gekennzeichnet, dass** das feststehende (bzw. bewegliche) Teil (9) des Eckverbinders (8) einen, im Innern des beweglichen (bzw. feststehenden) Teils (10) angeordneten Arm (41) umfasst, der zwischen einer Stellung, in der die beiden Teile in großem Anstand zueinander stehen, so dass die Seitenwände der Verkleidung (4 bis 7) frei bewegt werden können, und einer Stellung, in der die beiden Teile in kurzem Abstand zueinander stehen und die der Befestigungsstellung der Seitenwände entspricht, gleitend verschoben werden kann, wobei der Übergang von einer Stellung in die andere mit Hilfe einer Betätigungsvorrichtung (30, 33, 39, 40...) erfolgt, die in der letztgenannten Stellung mit einem Befestigungselement des beweglichen Teils zusammenwirkt.

3. Schaltschrank nach Anspruch 2, **dadurch gekennzeichnet, dass** die Betätigungsvorrichtung eine Steuerkurve (30) umfasst, die drehbar auf einem am feststehenden (bzw. beweglichen) Teil (9) im Innern einer in der beweglichen (bzw. feststehenden) Teil (10) vorgesehenen Aussparung (32) befestigten Zapfen (31) gelagert ist, wobei die drehwirksame Mitführung der Steuerkurve (30) durch eine geeignete Betätigungsvorrichtung eine Verschiebung des beweglichen Teils (10) und so die Befestigung der Seitenwände (4 bis 7) bewirkt.

4. Schaltschrank nach Anspruch 2, **dadurch gekennzeichnet, dass** die Betätigungsvorrichtung eine am Ende eines Hebels (33) ausgebildete Steuerkurve (32a) umfasst, welcher Hebel drehbar auf einem fest mit dem genannten Arm (41) des beweglichen Teils (10) verbundenen Zapfen (34) gelagert ist, wobei die Steuerkurve (32) mit einer Außenfläche (36) des feststehenden (beweglichen) Teils (9) zusammenwirkt und der Hebel (33) durch eine Schraube (37) in der Befestigungsstellung der Seitenwände gehalten wird, welche Schraube eine im Hebel (33) ausgebildete Öffnung durchragt und in das feststehende Teil (9) eingeschraubt ist.

5. Schaltschrank nach Anspruch 2, **dadurch gekennzeichnet, dass** die Betätigungsvorrichtung eine im genannten Arm (41) ausgebildete Aussparung aufweist, welche Aussparung (40) mit einem Keil (39) zusammenwirkt.

6. Schaltschrank nach Anspruch 2, **dadurch gekennzeichnet, dass** die Betätigungsvorrichtung eine im genannten Arm (41) ausgebildete und mit einer Kegelschraube (42) zusammenwirkende konische Gewindebohrung (43) umfasst.

7. Schaltschrank nach Anspruch 2, **dadurch gekennzeichnet, dass** die Betätigungsvorrichtung ein im Inneren des Arms (41) angeordnetes Exzentersystem (45) umfasst.

8. Schaltschrank nach Anspruch 2, **dadurch gekennzeichnet, dass** die Betätigungsvorrichtung ein im Inneren des Arms (41) angeordnetes Spiralklemmsystem (46) umfasst.

9. Schaltschrank nach Anspruch 1, **dadurch gekennzeichnet, dass** die Betätigungs- und Befestigungsvorrichtungen eine Schraube (21) und zwei im beweglichen Teil (10) bzw. im feststehenden Teil (9) ausgebildete, in einer Flucht hintereinander angeordnete Öffnungen (22, 23) umfassen, wobei eine Öffnung (22) als Durchgangsbohrung und die andere (23) als Gewindebohrung ausgebildet ist.

10. Schaltschrank nach Anspruch 1, **dadurch gekennzeichnet, dass** die Verschiebung des beweglichen Teils (10) mit Hilfe einer Betätigungsmutter (50) erfolgt, die gleitend im feststehenden Teil (9) gelagert ist und durch mindestens eine Druckfeder (51, 52) im genannten feststehenden Teil (9) positioniert wird, wobei in der genannten Mutter (50) ein Schrägschlitz (53) ausgebildet ist, der mit einem am beweglichen Teil (10) befestigten Zapfen (54) so zusammenwirkt, dass die geradlinige Verschiebung der Betätigungsmutter (50) durch die Schraube (55) die Verschiebung des beweglichen Teils (10) längs einer senkrecht zur Verschiebeachse der Betätigungsmutter 50 angeordneten Achse bewirkt.

11. Schaltschrank nach Anspruch 2, **dadurch gekennzeichnet, dass** der Zugang zur Befestigungsvorrichtung von vorne, von hinten oder von der Seite erfolgen kann.

12. Schaltschrank nach Anspruch 1, **dadurch gekennzeichnet, dass** das feststehende Teil (9) ein Profil mit einer darin ausgebildeten Nut mit L-förmigem Querschnitt (27) umfasst, welche Nut zur Aufnahme eines biegesteifen Elements (28) dient, das im Innern einer dehnbaren Dichtung (29) angeordnet ist und das bewegliche Teil (10) bildet.

13. Schaltschrank nach irgendeinem der Ansprüche 1 bis 12, **dadurch gekennzeichnet, dass** das bewegliche Teil (10), oder das feststehende Teil (9), einen Endanschlag (26, 10c) umfasst, der dazu dient, die Verschiebung des beweglichen Teils (10) während des Befestigungsvorgangs zu begrenzen.

14. Schaltschrank nach irgendeinem der Ansprüche 1 bis 13, **dadurch gekennzeichnet, dass** der genannte Eckverbinder eine Nut aufweist, die dazu dient, mit Hilfe eines Keils o.ä. die Verbindung mit einem anderen Eckverbinder zu ermöglichen.

15. Schaltschrank, **dadurch gekennzeichnet, dass** der genannte Eckverbinder als Winkelverbinder ausgebildet ist, welcher aus zwei Eckverbindern besteht, die so miteinander verbunden sind, dass sie einen zusammengebauten einstückigen Eckverbinder bilden.
